(19) Europäisches Patentamt
European Patent Office
Office européen des brevets

(11) EP 1 760 492 B1

(12) **FASCICULE DE BREVET EUROPEEN**

(45) Date de publication et mention
de la délivrance du brevet:
**15.10.2014 Bulletin 2014/42**

(51) Int Cl.:
***G01V 99/00*** (2009.01)

(21) Numéro de dépôt: **06291384.3**

(22) Date de dépôt: **30.08.2006**

(54) **Méthode pour mettre à jour un modèle géologique de réservoir a l'aide de données dynamiques**

Verfahren zum Aktualisieren eines geologischen Modells eines Reservoirs mittels dynamischer Daten

Method of updating a geological model of a reservoir with the aid of dynamic data

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.09.2005 FR 0509040**

(43) Date de publication de la demande:
**07.03.2007 Bulletin 2007/10**

(73) Titulaire: **Institut Français du Pétrole**
**92852 Rueil-Malmaison Cedex (FR)**

(72) Inventeurs:
• **Le Ravalec-Dupin, Mickaële**
**92500 Rueil-Malmaison (FR)**
• **Hu, Lin Ying**
**92500 Rueil-Malmaison (FR)**

(56) Documents cités:
**FR-A- 2 780 798    FR-A- 2 851 670**

• **ARENAS ELIANA ET AL: "Semi-Automatic History Matching Using the Pilot Point Method Including Time-Lapse Seismic Data" PROC SPE ANNU TECH CONF EXHIB; PROCEEDINGS - SPE ANNUAL TECHNICAL CONFERENCE AND EXHIBITION 2001, 2001, pages 2689-2700, XP002388010**
• **GALLI ALAIN ET AL: "Stochastic-aided design and Bayesian updating: New tools to use expert knowledge in quantitative models that incorporate uncertainty" PROC SPE ANNU TECH CONF EXHIB; PROCEEDINGS - SPE ANNUAL TECHNICAL CONFERENCE AND EXHIBITION; 2004 SPE ANNUAL TECHNICAL CONFERENCE AND EXHIBITION PROCEEDINGS 2004, 2004, pages 2603-2612, XP002388011**
• **BISSELL R C ET AL: "Combining geostatistical modelling with gradient information for history matching: the pilot point method" PROC SPE ANNU TECH CONF EXHIB; PROCEEDINGS - SPE ANNUAL TECHNICAL CONFERENCE AND EXHIBITION; FORMATION EVALUATION AND RESERVOIR GEOLOGY 1997 SOCIETY OF PETROLEUM ENGINEERS (SPE), RICHARDSON, TX, USA, vol. OMEGA, no. part 2, 1997, pages 139-154, XP002388012**

EP 1 760 492 B1

## Description

La présente invention concerne une méthode pour mettre à jour un modèle géologique de réservoir, représentatif de la structure et du comportement d'un réservoir pétrolier, par intégration de données dynamiques.

Plus particulièrement, la méthode selon l'invention s'applique à la construction d'une carte, associée au modèle géologique de réservoir, représentative des propriétés pétrophysiques statiques et dynamiques ainsi que de leurs variabilités spatiales.

La méthode vise à donner à l'ingénieur les moyens de mieux estimer les réserves d'un gisement pétrolier et d'en optimiser la récupération en choisissant un schéma de production adéquat.

## État de la technique

L'optimisation et l'exploitation des gisements pétroliers reposent sur une description aussi précise que possible de la structure et du comportement du réservoir étudié. Pour ce faire, les spécialistes utilisent un outil qui permet de rendre compte de ces deux aspects de façon approchée : le modèle géologique de réservoir. Un modèle géologique de réservoir a donc pour vocation de rendre compte, au mieux, de la structure et du comportement du réservoir. Le modèle est, pour ce faire, constitué de différents éléments : un maillage qui constitue l'ossature du réservoir et qui doit être représentatif de la structure, et des cartes de propriétés pétrophysiques associées à ce maillage et qui doivent être représentatives du comportement. Cette association consiste à attribuer une valeur pétrophysique issue de cartes à chaque maille du modèle.

Une carte de propriété pétrophysique décrit la répartition spatiale, ou structure spatiale, dans une zone souterraine, de propriétés pétrophysiques continues ou discrètes, comme la perméabilité, la porosité, le type de lithologie... Classiquement ces cartes sont obtenues à partir de méthodes stochastiques, et sont alors appelées : modèles stochastiques. Dans un contexte stochastique, on parle plutôt de réalisations que de modèles numériques.

De la précision de ces réalisations stochastiques (cartes de propriétés pétrophysiques) va donc directement dépendre la qualité de l'optimisation et de l'exploitation d'un gisement pétrolier. Il convient donc d'élaborer des réalisations stochastiques, et donc plus généralement des modèles de réservoir, aussi cohérents que possibles avec l'ensemble des données collectées (puits, sismiques, laboratoires,...).

Les données dont on dispose pour contraindre les réalisations stochastiques sont dites statiques ou dynamiques. Une donnée est statique si elle correspond à une mesure de la propriété modélisée en un point donné et si elle est indépendante du temps. Les mesures de perméabilité faites en laboratoire sur des échantillons de roches ou encore les diagraphies mesurées le long des puits sont des données statiques, par exemple. Une donnée est dynamique si elle dépend du temps, elle est liée à la propriété modélisée, mais n'en est pas une mesure directe. Les données de production et les données de sismique 4D qui varient avec les écoulements de fluides sont des données dynamiques. Comme les données sont insuffisantes pour permettre une description déterministe de la répartition spatiale de la propriété considérée, on recourt à des techniques de modélisation stochastique, le plus souvent basées sur des techniques géostatistiques, qui fournissent une famille de modèles stochastiques numériques associés au modèle géologique de réservoir, et appelés réalisations.

Dans un contexte stochastique, les données décrivant la géologie du milieu définissent une fonction aléatoire. Pour une même fonction aléatoire, il existe une infinité de réalisations possibles. Toutes ces réalisations ne sont pas compatibles par contre avec les données dynamiques.

L'intégration des données statiques et dynamiques dans la réalisation stochastique n'est pas réalisée de la même façon. L'intégration des données statiques s'effectue au moment de la génération de la réalisation tandis que celle des données dynamiques passe par la résolution d'un problème inverse faisant appel au simulateur d'écoulement. Pour aborder le problème inverse, on commence par définir une fonction dite objectif, ou encore « fonction coût », qui mesure l'intérêt de la réalisation ou du modèle de réservoir proposé. Dans les premiers travaux consacrés à ce sujet, la fonction objectif était une mesure directe de la différence entre les données dynamiques collectées sur le terrain et les réponses correspondantes obtenues par simulation :

$$J(\mathbf{y}) = \sum_i w_i \left( d_{sim_i} - d_{obs_i} \right)^2$$

$\mathbf{y}$ est la réalisation considérée et $J(\mathbf{y})$ la valeur de la fonction objectif pour cette réalisation. Les $w$ sont des coefficients de pondération. Les $d_{obs}$ sont les données dynamiques collectées, et les $d_{sim}$ sont les réponses correspondantes simulées. $g$ est l'opérateur qui va de l'espace des réalisations non contraintes vers l'espace des données

dynamiques : $\mathbf{d}_{sim} = g(\mathbf{y})$. En minimisant cette fonction objectif, on détermine une réalisation y reproduisant aussi bien que possible l'ensemble des données dynamiques. Malheureusement, la structure spatiale de la réalisation y ainsi obtenue n'est en général plus cohérente avec celle de la réalisation initiale, c'est à dire avec les données géologiques.

Un cadre plus adapté à la définition de la fonction objectif est fourni par l'approche bayésienne. On ajoute alors de l'information a priori dans la fonction objectif. Cette approche est décrite dans le document suivant :

- Tarantola, A., 1987, « Inverse problem theory - Methods for data fitting and model parameter estimation. », Elsevier, Amsterdam, 613 p.
  La fonction objectif s'exprime alors comme suit:

$$ J(\mathbf{y}) = \frac{1}{2}\left(g(\mathbf{y}) - \mathbf{d}_{obs}\right)' \mathbf{C}_D^{-1}\left(g(\mathbf{y}) - \mathbf{d}_{obs}\right) + \frac{1}{2}\left(\mathbf{y} - \mathbf{y}_o\right)' \mathbf{C}_Y^{-1}\left(\mathbf{y} - \mathbf{y}_o\right) $$

Le premier terme de la fonction objectif traite de la contrainte de vraisemblance : il mesure l'écart entre les données dynamiques observées sur le terrain et les données équivalentes obtenues par simulation numérique. Le deuxième terme correspond à la contrainte a priori : il quantifie la différence entre le modèle de réservoir a priori, $y_o$, déduit des informations géologiques a priori, et le modèle de réservoir proposé, y. La matrice de covariance $\mathbf{C}_D$ caractérise les incertitudes expérimentales et théoriques, tandis que $\mathbf{C}_Y$ relève de l'incertitude sur le modèle a priori. La minimisation de la fonction objectif fournit alors un modèle y peu éloigné que possible du modèle a priori et tel que les données $\mathbf{d}^{sim}$ simulées pour ce modèle soient proches des données mesurées sur le terrain.

Le calcul de la fonction objectif peut s'avérer difficile, notamment à cause des deux matrices de covariance qu'il faut inverser. En règle générale, la matrice de covariance relative aux données est supposée diagonale et s'inverse aisément. Cette hypothèse est assurément discutable suivant les cas envisagés, par exemple avec la sismique 4D, mais n'est pas remise en cause ici. Le cas de la matrice de covariance relative au modèle y est plus embarrassant. En effet, la matrice de covariance a priori $C_Y$ a pour dimension la longueur du vecteur y et le calcul de son inverse est souvent impossible pour les modèles comportant un nombre très important de mailles. A ce jour, pour simplifier la prise en compte de la contrainte a priori, essentiellement trois types d'approches ont été développés. Le premier type d'approche relève de la décomposition de la matrice de covariance $C_Y$ dans des sous-espaces : les composantes les moins influentes sont négligées, ce qui permet de réduire le nombre de variables. Cette technique est décrite dans le document suivant :

- Reynolds, A. C., He, N., Chu, L., and Oliver, D. S., 1995, «Reparameterization techniques for generating reservoir descriptions conditioned to variograms and well-test pressure data. », SPE Annual Technical Conference and Exhibition, Dallas, TX, 22-25 October, SPE 30588, p. 609-624.
  Le deuxième type d'approche repose sur la modélisation mathématique des erreurs dans l'espace des paramètres par une fonction aléatoire gaussienne de moyenne zéro et de covariance exponentielle le long de directions privilégiées. Il existe alors des propriétés mathématiques qui permettent de calculer analytiquement l'inverse de la matrice de covariance a priori. Cette méthode est décrite par exemple dans le brevet FR 2 635 197 (US 4 972 383).

Enfin, le troisième type fait intervenir un paramétrage géostatistique. S'y distinguent la méthode des points pilotes introduite dans le document suivant :

- Marsily, G. de, 1978, « De l'identification des systèmes hydrologiques. », Thèse de Doctorat d'Etat, Université Paris VI, France.
  et la méthode de déformation graduelle décrite dans le document suivant :

- Hu, L.Y., 2000, « Gradual deformation and iterative calibration of Gaussian-related stochastic models. », Math. Geology, v. 32, no. 1, p. 87-108.

**La méthode des points pilotes** a d'abord été introduite dans le cadre de l'estimation avant d'être étendue au conditionnement de réalisations stochastiques par des données dynamiques par :

- RamaRao, B.S., LaVenue, A.M., de Marsilly, G., and Marietta, M.G., 1995, «Pilot point methodology for automated calibration of an ensemble of conditionally simulated transmissivity fields. 1. Theory and computational experiments. », Water Res. Res., 31(3), 475-493.

Cette technique permet de déformer localement des réalisations à partir d'un nombre réduit de paramètres, tout en respectant la variabilité spatiale de la propriété modélisée (perméabilité, porosité, vitesse...). Brièvement, pour modifier la réalisation, on sélectionne un ensemble de points (ou mailles), dits pilotes, dont les valeurs peuvent être modifiées. La perturbation engendrée en ces points est propagée à l'ensemble de la réalisation par krigeage suivant l'expression :

$$\mathbf{y}_c(\mathbf{x}) = \mathbf{y}_{dK}(\mathbf{x}) + \left[\mathbf{y}(\mathbf{x}) - \mathbf{y}_K(\mathbf{x})\right]$$

y est une réalisation non contrainte. $y_{dK}$ résulte du krigeage des données statiques et des valeurs des points pilotes et $y_K$ du krigeage des valeurs de y aux mêmes points. $y_c$ est une réalisation contrainte qui honore le modèle de variabilité spatiale et les valeurs des données statiques ainsi que les valeurs choisies pour les points pilotes. En d'autres termes, on assimile les points pilotes à des données statiques que l'on utilise pour contraindre la réalisation. Les valeurs des points pilotes sont les paramètres du problème d'optimisation. Ces « pseudos » données, contrairement aux véritables données statiques, ne sont pas fixes : elles peuvent varier pendant le processus d'optimisation de façon à réduire la fonction objectif. Comme les modifications sont propagées à toute la réalisation par krigeage, on assure la conservation du modèle de variabilité spatiale. Dès lors, il est considéré comme redondant d'ajouter le terme relatif à la contrainte a priori dans la fonction objectif. Cette dernière se ramène alors au terme unique mesurant l'écart entre les données dynamiques réelles et les réponses correspondantes obtenues par simulation. Il n'est plus nécessaire de déterminer l'inverse de la matrice de covariance a priori. Cette propriété est fondamentale et caractéristique de la méthode des points pilotes.

Toutefois, la méthode des points pilotes peut donner lieu à des artefacts numériques. Dans certains cas, la minimisation de la fonction objectif passe par l'attribution de valeurs extrêmes aux points pilotes. On peut alors aboutir à des valeurs soit trop fortes, soit trop faibles, qui n'ont plus vraiment de sens, physiquement parlant. Pour éviter ces artefacts, des contraintes par inégalités peuvent être intégrées dans le processus d'optimisation : les variations des paramètres sont alors bornées. Cette technique est précisée dans le document de RamaRao *et al.* (1995) précédemment cité. Par ailleurs, les valeurs des points pilotes sont ajustées indépendamment les unes des autres. Il faut donc que les points pilotes soient séparés par une distance supérieure ou égale à la longueur de corrélation. Si cette distance minimale n'est pas respectée, la méthode des points pilotes ne garantit pas la préservation du modèle de variabilité spatiale.

**La méthode de déformation** graduelle a été initialement proposée pour modifier continûment des processus stochastiques Gaussiens (processus aléatoires). C'est une technique de paramétrage géostatistique qui permet de déformer une réalisation d'un modèle de réservoir comprenant un nombre quelconque de mailles à partir d'un nombre réduit de paramètres, tout en respectant le modèle de variabilité spatiale. Le concept de base est que la somme de fonctions aléatoires Gaussiennes est une fonction aléatoire Gaussienne.

Le schéma de déformation graduelle le plus simple consiste à additionner deux fonctions aléatoires multi Gaussiennes. Soient $Y^1$ et $Y^2$, deux telles fonctions, indépendantes et stationnaires d'ordre 2. On les suppose aussi de mêmes moyenne ($y_0$), variance et modèle de covariance. On construit une nouvelle fonction aléatoire $Y(t)$ en combinant $Y^1$ et $Y^2$ suivant l'expression :

$$Y(t) - y_o = \left[Y^1 - y_o\right]\cos(t) + \left[Y^2 - y_o\right]\sin(t)$$

On peut montrer que pour tout coefficient de déformation $t$, $Y$ a même moyenne, variance et modèle de variabilité spatiale que $Y^1$ et $Y^2$. En effet, la somme des coefficients au carré, c'est à dire $\cos^2(t)+\sin^2(t)$, vaut 1. Suivant ce principe de combinaison, on peut, à partir de deux réalisations indépendantes de $Y^1$ et $Y^2$, notées $y^1$ et $y^2$, construire une chaîne de réalisations dépendant uniquement du paramètre de déformation t.

$$y(t) - y_o = \left[y^1 - y_o\right]\cos(t) + \left[y^2 - y_o\right]\sin(t)$$

Cette chaîne de réalisations passe par $y^1$ et $y^2$. Quand $t$ vaut 0, $y$ égale $y^1$. Quand $t$ vaut $\pi/2$, $y$ égale $y^2$. En variant continûment le coefficient de déformation $t$ depuis 0, on simule la déformation continue de la réalisation $y^1$. En variant continûment le coefficient de déformation $t$ depuis 0, on simule la déformation continue de la réalisation $y^1$, prise comme réalisation initiale. Un point essentiel est que, pour toute valeur de $t$, la réalisation $y$ est multi Gaussienne et respecte les moyenne, variance et modèle de variabilité spatiale de $y^1$ et $y^2$.

Lorsque la méthode de déformation graduelle est intégrée dans un processus d'optimisation comme technique de paramétrage, la fonction objectif à minimiser devient :

$$J(\mathbf{t}) = \frac{1}{2}\left[g(\mathbf{t}) - \mathbf{d}_{obs}\right]' \mathbf{C}_D^{-1}\left[g(\mathbf{t}) - \mathbf{d}_{obs}\right].$$

En effet, comme pour la méthode des points pilotes, il semble redondant d'ajouter la contrainte a priori dans la fonction objectif, car le paramétrage préserve intrinsèquement le modèle de variabilité spatiale. Le vecteur **t** rassemble les différents coefficients de déformation. Ces coefficients sont les paramètres du problème d'optimisation. Il s'agit d'identifier ces paramètres de déformation de façon à réduire la fonction objectif autant que possible.

La méthode de déformation graduelle, telle qu'elle est présentée ici, implique que l'ensemble de la réalisation est déformé pour minimiser la fonction objectif. Toutefois, la méthode de déformation graduelle peut aussi s'appliquer localement. Dans ce cas, au lieu de combiner des réalisations avec un modèle de variabilité spatiale donné, on combine les bruits blancs Gaussiens utilisés pour générer ces réalisation structurées. Plus précisément, quand on veut localiser la déformation sur une zone donnée, on déforme graduellement les composantes (les nombres aléatoires) du bruit blanc Gaussien attribuées aux mailles comprises dans la zone à déformer. Cette technique est décrite dans le document suivant :

- Le Ravalec, M., Noetinger, B., and Hu, L.-Y., 2000, « The FFT moving average (FFT-MA) generator: an efficient numerical method for generating and conditioning Gaussian simulations. », Math. Geol., 32(6), 701-723.

FR 2 851 670 décrit un modèle stochastique d'un réservoir, contraint par des données statiques et dynamiques.

A la limite, la méthode de déformation graduelle peut être appliquée à une composante isolée du bruit blanc Gaussien. Elle tend alors vers la méthode des points pilotes. Une différence importante est à noter : la méthode de déformation graduelle empêche que le point modifié ne prenne des valeurs extrêmes. En outre, si plusieurs points sont modifiés suivant la méthode de déformation graduelle, les corrélations spatiales entre les points déformés sont prises en compte. Cependant, la méthode de déformation graduelle est négligeable quand elle est appliquée à des points . Aussi, un processus d'optimisation impliquant ce type de paramétrage sera-t-il vraisemblablement beaucoup moins efficace que la méthode des point pilotes.

La méthode selon l'invention permet de déformer localement une réalisation de façon significative tout en préservant le modèle de variabilité spatiale.

## La méthode selon l'invention

L'invention concerne une méthode de mise à jour d'un modèle géologique de réservoir, représentatif du comportement d'un milieu poreux hétérogène et discrétisé dans l'espace en un ensemble de cellules formant un maillage représentatif de la structure dudit milieu, permettant de prendre en compte des données dynamiques (DD) acquises par mesures et variant au cours du temps en fonction d'écoulements de fluide dans ledit milieu, la méthode comportant les étapes suivantes :

A) on construit une carte initiale ($y$) de propriétés pétrophysiques à l'aide d'un simulateur géostatistique et de données statiques (SD) ;

B) on intègre lesdites données dynamiques (DD) en optimisant ladite carte initiale en réalisant les étapes suivantes :

a)- on construit un jeu initial de points pilotes graduels ($PP_i$) ;

b)- on construit au moins un jeu complémentaire de points pilotes graduels ($PP_c$) ;

c)- on construit un jeu combiné de points pilotes graduels ($PP(t)$) en combinant lesdits jeux de points pilotes graduels ($PP_i$ et $PP_c$) suivant la méthode de déformation graduelle dans laquelle au moins un paramètre de déformation est un paramètre caractéristique desdits points pilotes ;

d)- on modifie les valeurs des propriétés pétrophysiques de ladite carte initiale ($y$) en la contraignant par ledit jeu combiné de points pilotes graduels ($PP(t)$) et par lesdites données statiques (SD) ;

e)- on modifie ledit jeu combiné (*PP*(*t*)) et l'on réitère à l'étape c) jusqu'à ce qu'un critère d'arrêt soit atteint ;

C) on met à jour ledit modèle géologique de réservoir, en associant ladite carte optimisée à l'étape B) audit maillage du modèle.

Les jeux initiaux et complémentaires de point pilotes graduels peuvent être construits à l'aide de générations aléatoires utilisant des lois de distributions déduites des valeurs des données statiques (SD).
Les paramètres caractéristique d'un point pilote peuvent être choisis parmi les paramètres suivants : sa position et sa valeur de propriété pétrophysique associée.
Selon l'invention on peut utiliser un simulateur d'écoulement pour estimer des données dynamiques simulées à partir des valeurs des propriétés pétrophysiques de ladite carte initiale (*y*) modifiée. On peut ainsi effectuer une comparaison, à l'aide d'une fonction objectif, des données dynamiques simulées et des données dynamiques acquises par mesures, pour modifier le jeu combiné et définir le critère d'arrêt. Dans ce mode de réalisation, tant que la fonction objectif est supérieure à un seuil, si elle ne converge pas, on peut modifier ledit paramètre de déformation et poursuivre l'optimisation à l'étape c), et si elle converge, on peut remplacer le jeu initial de points pilotes graduels (*PP*ᵢ) par le jeu combiné de points pilotes graduels (*PP*(*t*)) et réitérer à partir de l'étape b)
Les données statiques peuvent être des diagraphies et/ou des mesures sur des échantillons prélevés dans des puits et/ou des données sismiques, et les données dynamiques peuvent être des données de production et/ou d'essais de puits et/ou de temps de percé.

**Présentation succincte des figures**

D'autres caractéristiques et avantages de la méthode selon l'invention, apparaîtront à la lecture de la description ci-après d'exemples non limitatifs de réalisations, en se référant aux figures annexées et décrites ci-après.

- la figure 1 schématise la méthode selon l'invention avec déformation d'un seul paramètre ;

- la figure 2 schématise la méthode selon l'invention avec déformation de plusieurs paramètres ;

- la figure 3 montre un champ de perméabilité de référence et lignes de courant. Les positions ou des valeurs de perméabilités sont connues sont indiquées par des ronds avec des croix superposées ;

- la figure 4 illustre une fonction de répartition (CDF) des temps (T) pris par des particules pour traverser le milieu ;

- la figure 5A montre une réalisation initiale ;

- la figure 5B montre une réalisation contrainte par les données dynamiques à partir de la méthode des points pilotes ;

- la figure 5C montre une réalisation contrainte par les données dynamiques à partir de la méthode de déformation graduelle globale ; et

- la figure 5D montre une réalisation contrainte par les données dynamiques à partir de la méthode des points pilotes graduels. La position des points pilotes est indiquée par un carré avec une croix superposée.

**Description détaillée de la méthode**

La méthode selon l'invention concerne une méthode pour mettre à jour un modèle géologique de réservoir, représentatif de la structure et du comportement d'un milieu poreux hétérogène, par intégration de données dynamiques. Plus particulièrement, la méthode selon l'invention s'applique à la construction d'une carte, associée à un modèle géologique de réservoir, représentative des propriétés pétrophysiques statiques ainsi que de leurs variabilités spatiales, cohérente avec les données dynamiques collectées sur le terrain, comme des données de production ou des données de sismique 4D.
Un modèle géologique de réservoir est constitué d'un maillage, discrétisant la structure d'un milieu poreux hétérogène, et d'au moins une carte de propriétés pétrophysiques, représentatives du comportement de ce milieu. Une carte se compose d'un maillage, qui n'est pas nécessairement le même que le maillage du modèle géologique de réservoir, dont chaque maille est associée à une valeur pétrophysique. L'ensemble de ces valeurs, liées par des relations spatiales, constitue une « réalisation ». Ce terme vient du fait que l'on considère que la propriété pétrophysique et considérée comme une variable aléatoire. Différentes réalisations de cette variable aléatoire fournit autant de cartes de propriétés pétrophysiques.

Selon l'invention la construction de telles cartes comporte trois étapes principales :

**<u>Étape *E1*</u>**

Tout d'abord, on mesure sur le terrain d'une part, des données statiques (SD) telles que des diagraphies, des mesures sur des échantillons prélevés dans les puits, des données sismique, et d'autre part, des données dynamiques (DD) telles que des données de production, d'essais de puits, ou de temps de percé et dont la particularité est de varier au cours du temps en fonction des écoulements de fluide dans le réservoir.

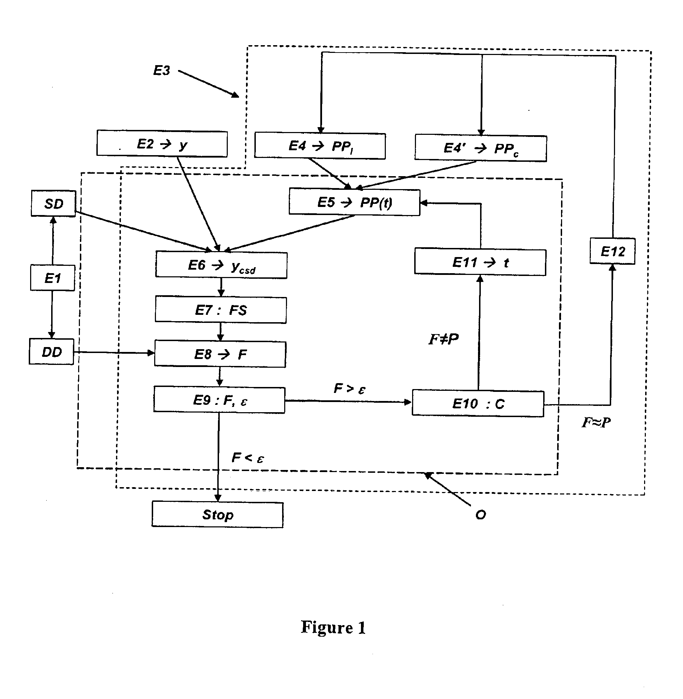

Ensuite on réalise une analyse de leurs variabilités spatiales par des techniques bien connues des spécialistes telle que l'analyse variographique. Le schéma général de la méthode selon l'invention, est représenté sur la figure 1.

**<u>Étape E2</u>**

Puis, à partir des données statiques, on définit une fonction aléatoire, caractérisée par sa fonction de covariance (ou de façon analogue par son variogramme), sa variance et sa moyenne, à l'aide de techniques d'analyse de données bien connues des spécialistes.

Par ailleurs on définit, pour chaque carte, un maillage et un jeu de nombres aléatoires tirés indépendamment les uns des autres : il peut s'agir, par exemple, d'un bruit blanc Gaussien ou de nombres uniformes. Il existe donc un nombre aléatoire indépendant pour chaque maille et pour chaque carte.

Enfin, à partir d'un simulateur géostatistique choisi et du jeu de nombres aléatoires, un tirage aléatoire dans la fonction aléatoire est effectué, donnant accès à une réalisation, continue ou discrète, représentant une image possible des propriétés pétrophysiques du réservoir.

La réalisation aléatoire associée est notée $y$. Elle n'est contrainte ni par les données statiques (*SD*), ni par les données dynamiques (*DD*).

**<u>Étape *E3*</u>**

A ce stade, les données dynamiques n'ont pas été considérées. Elles sont intégrées dans les modèles géologiques de réservoir par le biais d'une optimisation ou d'un calage des cartes. On définit une fonction objectif mesurant l'écart entre les données dynamiques mesurées sur le terrain et les réponses correspondantes simulées pour la réalisation considérée. Le but du processus d'optimisation est de modifier petit à petit cette carte pour réduire la fonction objectif. Au final, les cartes modifiées sont cohérentes vis-à-vis des données statiques et vis-à-vis des données dynamiques.

Cette étape de la méthode selon l'invention peut être appelée « méthode des points pilotes graduels », car elle s'appuie sur une intégration de la méthode des points pilotes (Marsily, G., 1978) et de la méthode de déformation graduelle (Hu, L. Y., 2000). De fait, elle permet de modifier une réalisation localement et significativement comme la technique des points pilotes tout en préservant le modèle de variabilité spatiale comme la technique des déformations graduelles. Dans ce cadre, on appelle « points pilotes graduels » des points pilotes sur lequel on applique une technique de déformations graduelles.

Cette étape comporte les étape *E4* à *E12* suivantes.

**<u>Étapes *E4* et *E4'*</u>**

En parallèle à la génération d'une réalisation *y,* on construit un jeu initial de points pilotes graduels, noté $PP_i$ (étape *E4*), et au moins un jeu complémentaire de points pilotes graduels, noté $PP_c$ (étape *E4'*).

Pour ce faire, on définit tout d'abord la position sur la carte de chaque points. Des études de sensibilité peuvent être envisagées à partir de calcul de gradients pour placer aux mieux les points pilotes sur la carte. On peut également placer ces points dans des zones où l'on souhaite apporter une déformation à la carte. Par exemple, lorsque l'on veut intégrer des données de sismique 4D, il est judicieux de placer les points au niveau des interfaces entre les fluides saturant le réservoir.

Ensuite, on associe à chaque point pilote une valeur de propriété pétrophysique. Pour le jeu complémentaire, on génère aléatoirement et indépendamment, et en suivant la même fonction aléatoire que celle utilisée pour générée *y,* un jeu initial de valeurs. Ce jeu initial constitue alors une réalisation. Cette réalisation associée au jeu complémentaire de points pilotes graduels peut, par exemple, être produite à partir de la méthode de Cholesky. Cette méthode est décrite par exemple dans le document suivant :

- Chilès, J.P., Delfiner, P., 1999, « Geostatistics - Modeling spatial uncertainty, Wiley series in probability and statistics », New York, USA.

La méthode de Cholesky permet de générer des réalisations multi-gaussiennes en des points irrégulièrement distribués dans l'espace. Elle est appropriée tant que le nombre de points est peu important. Au delà de 1000 points, on préfère employer une autre méthode de simulation, telle que la méthode des bandes tournantes, la méthode de simulation séquentielle Gaussienne, ou encore la méthode FFTMA.

Pour le jeu initial on peut utiliser les mêmes méthodes, mais l'on peut également directement utiliser les valeurs de la carte initiale $y$.

## Étape *E5*

Les points pilotes graduels $PP_i$ et $PP_c$ sont ensuite combinés suivant la méthode de déformation graduelle pour produire un jeu de points pilotes graduels $PP(t)$. Le schéma de base consiste à combiner deux jeux de points pilotes graduels suivant l'expression :

$$y_P(t) - y_o = \left[ y_P^1 - y_o \right] \cos(t) + \left[ y_P^2 - y_o \right] \sin(t)$$

$y^1{}_P$ et $y^2{}_P$ sont les deux jeux de points pilotes graduels ramenés par anamorphose, si nécessaire, dans une base normale. Dans ce contexte, on vérifie que les paramètres d'inversion ne sont pas les valeurs des points pilotes graduels elles-mêmes, mais le coefficient de déformation $t$. Cette formulation réduite ici à la combinaison de deux jeux de points pilotes graduels peut être étendues à la combinaison de $N$ jeux de points pilotes graduels. Dans ce dernier cas, le nombre de paramètres de déformation est porté à $N$-1 comme montré dans le document suivant :

- Roggero, F., and Hu, L.-Y., 1998, « Gradual deformation of continuous geostatistical models for history matching », SPE ATCE, 49004, New Orleans, LA, USA.

L'intérêt de combiner ensemble un grand nombre de jeux de points pilotes graduels est d'apporter plus de flexibilité au processus d'optimisation. Il est en effet plus facile de réduire une fonction objectif quand on dispose de plusieurs leviers pour explorer l'espace des jeux de points pilotes graduels.

Les paramètres de déformation affectent simultanément l'ensemble des points pilotes graduels. Dans ce cas, la déformation graduelle est dite globale et les corrélations spatiales entre les points pilotes sont prises en compte. En d'autres termes, les points pilotes graduels obtenus $PP(t)$ honorent le modèle de variabilité spatiale pour toute valeur des paramètres de déformation ($t$).

## Étape *E6*

Après l'étape de combinaison graduelle, on se réfère à la technique du krigeage (étape *E6*) pour contraindre la réalisation $y$ précédemment générée à l'étape *E2,* par les données statiques d'une part (*SD*), et le jeu de points pilotes issu de la déformation graduelle $PP(t)$ d'autre part :

$$\mathbf{y}_{csd}(\mathbf{u}) = \mathbf{y}_{dK}(\mathbf{u}) + \left[ \mathbf{y}(\mathbf{u}) - \mathbf{y}_K(\mathbf{u}) \right]$$

y est la réalisation initiale issue de l'étape *E2,* $y_{dK}$ l'estimation du krigeage des données statiques disponibles ainsi que des points pilotes graduels, et $y_k$ l'estimation du krigeage des valeurs de y à l'emplacement des mesures et des points pilotes. $y_{csd}$ est la réalisation contrainte par les données statiques (*SD*).

## Étape *E7*

L'exécution d'une simulation d'écoulement *FS* pour cette réalisation contrainte $y_{csd}$ permet de calculer un ensemble de données dynamiques.

## Étape *E8*

A partir des donnes dynamiques calculées à l'étape *E7*, et des données dynamiques mesurées, on estime une fonction objectif *F* (étape *E8*). Cette fonction objectif mesure l'écart entre les données simulées et les données réelles mesurées.

## Étape *E9*

On compare la valeur de la fonction objectif avec un seuil fixé $\varepsilon$. $\varepsilon$ est un réel proche de zéro. Si la fonction objectif *F* est suffisamment faible, c'est-à-dire si *F* est inférieure à la valeur $\varepsilon$ fixée, le processus de recherche du minimum s'arrête (STOP). Dans le cas contraire, deux situations sont envisageables.

## Étape *E10*

Ces deux situations sont fonction de la convergence de la fonction objectif *F*. Ainsi à l'étape E10 on détermine si la fonction objectif converge vers une valeur palier, notée *P*, ou non. Ainsi, selon la convergence (*C*) ou non de la fonction objectif F on réalise l'étape E11 ou l'étape E12 :

## Étape *E11*

Si la fonction objectif n'a pas convergé, on poursuit l'optimisation *O* en cours, en variant les paramètres de déformation. Les paramètres des optimisations *O* successives sont les paramètres de déformation. Leur nombre égale le nombre de jeux de points pilotes complémentaires. Le nombre de paramètres peut donc être très réduit.

## Étape *E12*

Bien que la fonction objectif *F* soit encore importante (supérieur à $\varepsilon$), elle a convergé vers un palier *P*. On considère les paramètres de déformation, tels que le paramètre *t*, déterminés à ce stade comme des paramètres optimaux et on les utilise pour remettre à jour le jeu initial de points pilotes graduels initiaux $PP_i$. Puis, un nouveau jeu complémentaire de points pilotes $PP_c$ est tiré au hasard (étape *E4'*). On lance alors une nouvelle optimisation *O* des paramètres de déformation (étapes *E5* à *E11*).

Puisque la déformation des points pilotes graduels est globale, c'est à dire que les points pilotes sont modifiés simultanément à partir des mêmes paramètres de déformation, les points pilotes déformés honorent le modèle de variabilité spatiale. Cette propriété est importante. Elle permet de placer les points pilotes graduels comme on veut sur la réalisation. Il n'est pas nécessaire de respecter une distance minimale entre ces points.

En bref, les paramètres ajustés pour minimiser la fonction objectif sont les paramètres de déformation assurant la combinaison des points pilotes plutôt que les valeurs des points pilotes elles-mêmes. En d'autres termes, les valeurs des points pilotes ne sont plus directement gouvernées par l'optimiseur. On utilise la méthode de déformation graduelle comme intermédiaire entre les points pilotes et l'optimiseur. Ainsi, au cours du processus d'optimisation, l'optimiseur modifie les coefficients de déformation graduelle, qui eux contrôlent les valeurs des points pilotes.

## Second mode de réalisation

Selon un second mode de réalisation, la méthode selon l'invention peut être étendue en intégrant dans la fonction objectif un paramètre (*p*) de déformation graduelle contrôlant la position des points pilotes graduels. En faisant varier ce paramètre, on modifie la position des points pilotes graduels.

Dans ce mode de réalisation, on considère non seulement les valeurs des deux jeux de points pilotes graduels initiaux ($PP_i$ et $PP_c$), mais aussi leurs positions. Ces positions correspondent à des nombres uniformes qui sont transformés en nombres Gaussiens :

$$\mathbf{Y} = G^{-1}(\mathbf{x})$$

où *G* est la fonction de répartition normale standard, x le vecteur position du point pilote et Y son associé dans la base normale standard. On peut combiner graduellement deux positions possibles $\mathbf{x_1}$ et $\mathbf{x_2}$ de points pilotes suivant l'expression:

$$\mathbf{x}(p) = G[G^{-1}(\mathbf{x_1})\cos(p) + G^{-1}(\mathbf{x_2})\sin(p)]$$

*p* est le paramètre de déformation. En variant le paramètre de déformation, on modifie la position du point pilote. Cette méthode a été introduite dans le document :

- Hu, L.-Y., 2000, Geostats 2000 Cape Town, WJ Kleingeld and DG Krige (eds.), 1,94-103.

Ainsi, au cours du processus d'optimisation, on peut chercher à estimer le paramètre de déformation optimal *p,* c'est à dire la position des points pilotes réduisant le plus possible la fonction objectif.

### Autre mode de réalisation

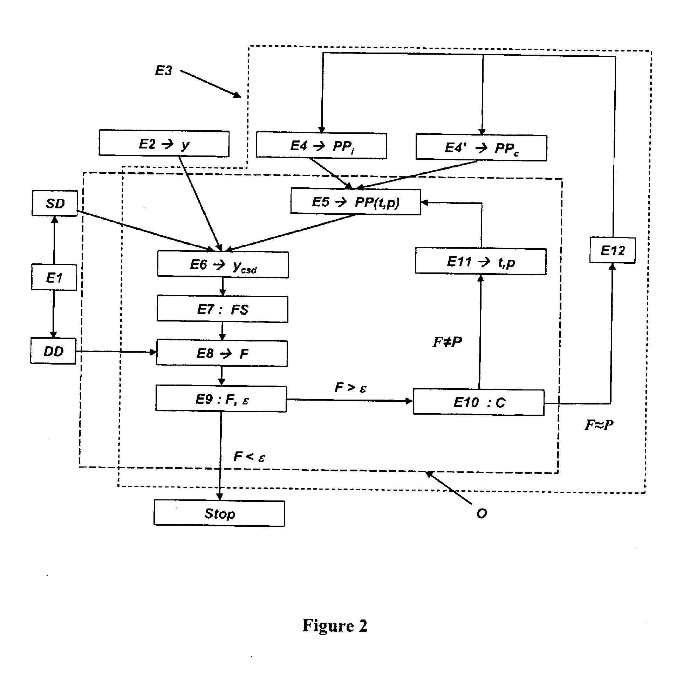

On peut également, selon un autre mode de réalisation de l'invention, chercher à estimer simultanément les paramètres de déformation optimaux *p* et *t*, comme illustré sur la figure 2.

### Exemple d'application

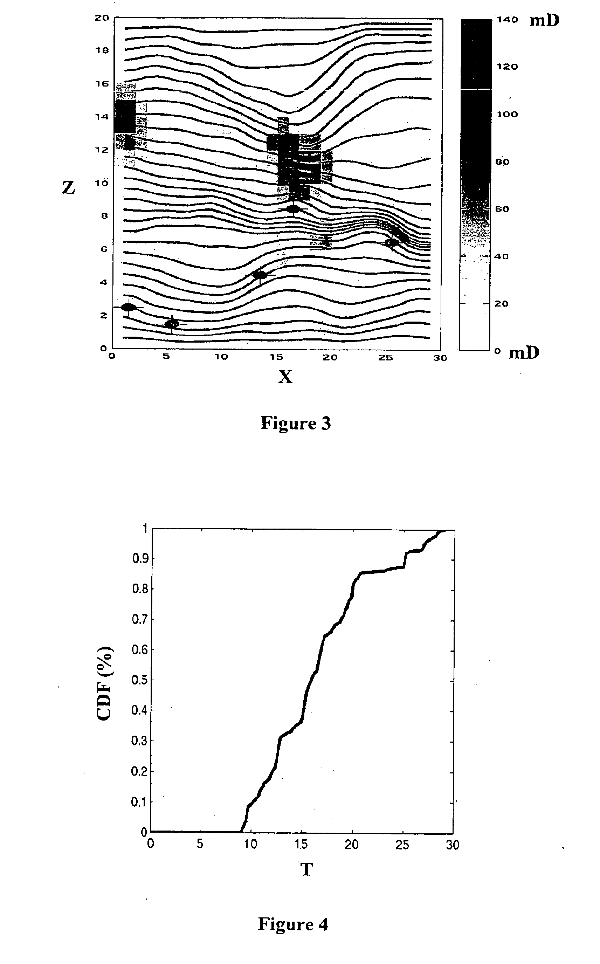

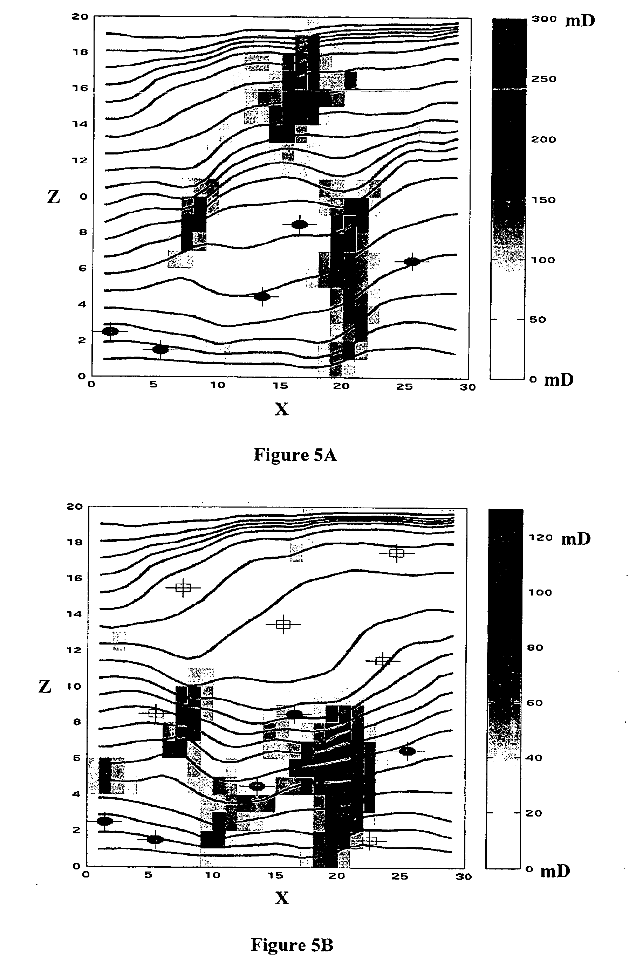

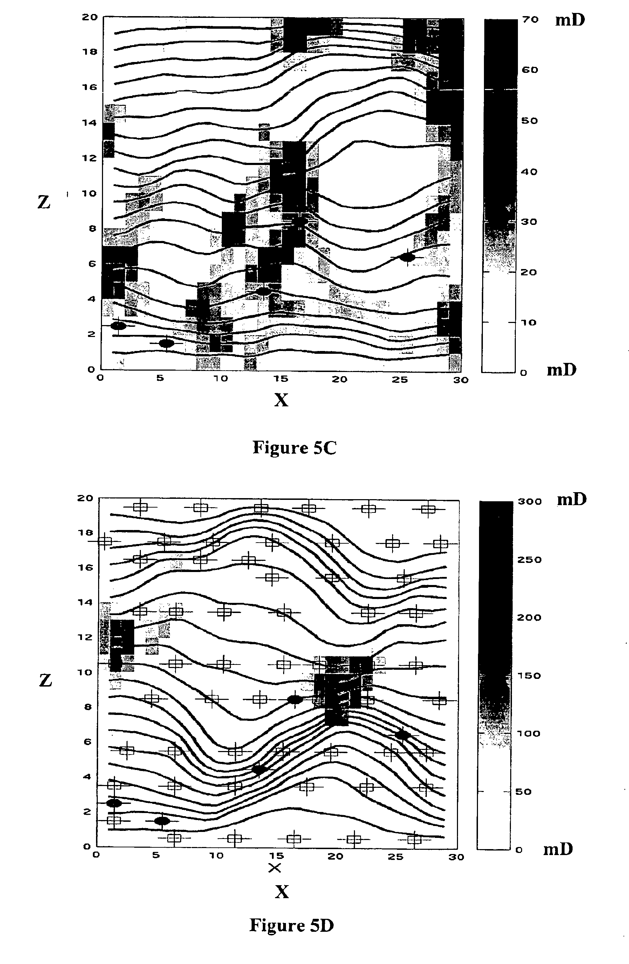

L'exemple suivant illustre l'efficacité de la méthode développée. Cet exemple est limité à la déformation des valeurs des points pilotes (paramètre *t* de déformation, figure 1). La figure 3 présente une carte (un champ) de perméabilité *k* synthétique discrétisée sur une grille de 30 mailles dans la direction *X*, et par 20 mailles dans la directions *Z*. La taille de la maille est de 1 m par 1 m. La distribution est lognormale ; la moyenne et la variance de ln(*k*) valent 3 et 1, respectivement. La variabilité spatiale de ln(*k*) est appréhendée par un variogramme isotrope sphérique de longueur de corrélation 10 m. Pour cette carte synthétique de référence, on simule numériquement une expérience d'injection de traceurs : des particules inertes sont injectées du côté gauche de la carte et produites du côté droit. On obtient alors des données dynamiques, dites de référence, qui sont la fonction de répartition (CDF) des temps (T) pris par la particules injectées pour traverser le milieu, comme l'illustre la figure 4, sur laquelle le temps T est indiqué en jour. On suppose à présent que la carte de perméabilité de référence n'est pas connue. La seule information disponible pour caractériser la carte de perméabilité est donnée par la moyenne, la variance, le modèle de variabilité spatiale, la mesure de la perméabilité en cinq points identifiés par des ronds sur lesquels sont superposées des croix et la fonction de répartition des temps de traversée. Considérons à présent la carte de perméabilité représenté sur la figure 5A comme point initial de notre processus d'investigation. Cette carte est cohérente vis à vis des propriétés statistiques, des cinq mesures de perméabilité, mais pas des temps de traversée. Il faut donc la déformer pour assurer aussi la reproduction des temps de traversée. On applique alors la méthode des points pilotes, la méthode de déformation graduelle et la méthode selon l'invention (méthode des points pilotes graduels) pour améliorer le calage des temps de traversée. A chaque fois, on part du même point initial. Les cartes de perméabilité obtenues en fin de calage, c'est à dire à la fin du processus d'optimisation, sont représentées sur les figures 5B, 5C et 5D pour chacune des méthodes. Pour la méthode des points pilotes (figure 5B), on a placé 6 points pilotes : ils sont symbolisés par des carrés auxquelles se superposent des croix. On rappelle que les points pilotes doivent être séparés par au moins une longueur de corrélation, ce qui limite le nombre de points possibles. On observe que la carte de perméabilité contrainte a été modifiée essentiellement en haut (figure 5B). Par ailleurs, dans le cadre de la méthode des points pilotes, on a un paramètre par point pilote. On utilise donc ici six paramètres. Pour la méthode de déformation graduelle (figure 5C) et la méthode selon l'invention (figure 5D), on considère un unique paramètre. L'ensemble de la carte de perméabilité a été modifié au cours du processus d'optimisation. Pour la méthode de déformation graduelle (figure 5C), ce résultat est naturel, car la déformation était de type globale. Pour la méthode selon l'invention (figure 5D), le fait de prendre en compte les corrélations spatiales entre points pilotes graduels nous autorise à en placer autant que l'on veut sur la carte de perméabilité. Enfin, l'efficacité des techniques de déformation utilisée est pressentie en termes de nombre de simulations d'écoulement pour réduire la fonction objectif de 95% (Tableau 1). La fonction objectif est ici définie comme la différence au carré entre les temps de traversée simulés et les temps de traversée de référence. Pour la méthode des points pilotes, le cas étudié nécessite l'exécution d'une centaine de simulations d'écoulement pour réduire la fonction objectif de 95%. Parallèlement, la méthode de déformation graduelle implique l'exécution d'une cinquantaine de simulations d'écoulement, alors que la méthode selon l'invention n'en réclame qu'une vingtaine.

**Tableau 1. Nombre de simulations d'écoulement exécutées pour réduire la fonction objectif de 95%.**

| Méthode de déformation | Nombre de simulations d'écoulement |
| --- | --- |
| Points pilotes | 100 |
| Déformation graduelle | 50 |
| Points pilotes graduels | 20 |

La méthode selon l'invention permet donc de mettre à jour un modèle géologique de réservoir, représentatif de la structure et du comportement d'un milieu poreux hétérogène, en intégrant des propriétés pétrophysiques statiques et dynamiques dans la définition des cartes associées. La méthode comporte un paramétrage qui permet d'intégrer des données dynamiques en déformant localement et efficacement une carte initiale pour la rendre cohérente vis-à-vis d'un ensemble de données dynamiques tout en préservant la structure spatiale de la réalisation. Les corrélations spatiales entre les points pilotes graduels sont prises en compte. On peut donc placer autant de points pilotes que l'on veut sur une carte de propriétés pétrophysiques : il n'est pas nécessaire de respecter une distance minimale entre les points. De plus, que cette méthode ne nécessite pas de contraindre les valeurs des points pilotes par des inégalités.

Enfin, les variations de la fonction objectif sont contrôlées à partir d'un petit nombre de paramètres (le nombre de paramètres n'est pas le nombre de points pilotes). A la limite, on minimise la fonction objectif en ajustant un unique paramètre de déformation.

La méthode donne donc à l'ingénieur des moyens d'intégrer les données dynamiques pour prédire le comportement dynamique d'un gisement pétrolier.

## Revendications

1. Méthode de mise à jour d'un modèle géologique de réservoir, représentatif du comportement d'un milieu poreux hétérogène et discrétisé dans l'espace en un ensemble de cellules formant un maillage représentatif de la structure dudit milieu, permettant de prendre en compte des données dynamiques (DD) acquises par mesures et variant au cours du temps en fonction d'écoulements de fluide dans ledit milieu, la méthode comportant les étapes suivantes :

   A) on construit une carte initiale ($y$) de propriétés pétrophysiques à l'aide d'un simulateur géostatistique et de données statiques (SD) ;
   B) on intègre lesdites données dynamiques (DD) en optimisant ladite carte initiale en réalisant les étapes suivantes :

   a)- on construit un jeu initial de points pilotes graduels ($PP_i$) ;
   b)- on construit au moins un jeu complémentaire de points pilotes graduels ($PP_c$) ;
   c)- on construit un jeu combiné de points pilotes graduels ($PP(t)$) en combinant lesdits jeux de points pilotes graduels ($PP_i$ et $PP_c$) suivant la méthode de déformation graduelle dans laquelle au moins un paramètre de déformation est un paramètre caractéristique desdits points pilotes ;
   d)- on modifie les valeurs des propriétés pétrophysiques de ladite carte initiale ($y$) en la contraignant par ledit jeu combiné de points pilotes graduels ($PP(t)$) et par lesdites données statiques (SD) ;
   e)- on modifie ledit jeu combiné ($PP(t)$) et l'on réitère à l'étape c) jusqu'à ce qu'un critère d'arrêt soit atteint ;

   C) on met à jour ledit modèle géologique de réservoir, en associant ladite carte optimisée à l'étape B) audit maillage du modèle.

2. Méthode selon la revendication 1, dans laquelle les jeux initiaux et complémentaires de point pilotes graduels sont construits à l'aide de générations aléatoires utilisant des lois de distributions déduites des valeurs des données statiques (SD).

3. Méthode selon l'une des revendications précédentes, dans laquelle les paramètres caractéristique d'un point pilote sont choisis parmi les paramètres suivants : sa position et sa valeur de propriété pétrophysique associée.

4. Méthode selon l'une des revendications précédentes, dans laquelle on utilise un simulateur d'écoulement pour estimer des données dynamiques simulées à partir des valeurs des propriétés pétrophysiques de ladite carte initiale ($y$) modifiée, et l'on effectue une comparaison, à l'aide d'une fonction objectif, desdites données dynamiques simulées et desdites données dynamiques acquises par mesures, pour modifier ledit jeu combiné et définir ledit critère d'arrêt.

5. Méthode selon la revendications 4, dans laquelle, tant que ladite fonction objectif est supérieure à un seuil, si elle ne converge pas, on modifie ledit paramètre de déformation et l'on poursuit l'optimisation à l'étape c), et si elle converge, on remplace le jeu initial de points pilotes graduels ($PP_i$) par le jeu combiné de points pilotes graduels ($PP(t)$) et l'on réitère à partir de l'étape b).

6. Méthode selon l'une des revendications précédentes, dans laquelle les données statiques sont des diagraphies et/ou des mesures sur des échantillons prélevés dans des puits et/ou des données sismiques.

7. Méthode selon l'une des revendications précédentes, dans laquelle les données dynamiques sont des données de production et/ou d'essais de puits et/ou de temps de percé.

**Patentansprüche**

1. Verfahren zur Aktualisierung eines geologischen Lagerstättenmodells, das für das Verhalten eines heterogenen porösen Mediums charakteristisch ist und im Raum in eine Menge Zellen diskretisiert ist, die ein Gitternetz bilden, das für die Struktur des Mediums charakteristisch ist, das es ermöglicht, dynamische Daten (DD) zu berücksichtigen, die bei Messungen erfasst werden und sich im Laufe der Zeit in Abhängigkeit von Strömungen von Fluid in dem Medium verändern, wobei das Verfahren die folgenden Schritte umfasst:

A) Aufbauen einer Ausgangskarte (y) von petrophysikalischen Eigenschaften mittels eines geostatistischen Simulators und statischer Daten (SD);
B) Integrieren der dynamischen Daten (DD) durch Optimieren der Ausgangskarte durch Ausführen der folgenden Schritte:

a)- Aufbauen einer Ausgangsmenge von graduellen Pilot-Points ($PP_i$);
b)- Aufbauen mindestens einer zusätzlichen Menge von graduellen Pilot-Points ($PP_c$);
c)- Aufbauen einer kombinierten Menge von graduellen Pilot-Points ($PP(t)$) durch Kombinieren der Mengen von graduellen Pilot-Points ($PP_i$ und $PP_c$) gemäß dem graduellen Verformungsverfahren, in dem mindestens ein Verformungsparameter ein Parameter ist, der für die Pilot-Points charakteristisch ist;
d)- Ändern der Werte der petrophysikalischen Eigenschaften der Ausgangskarte (y), indem sie durch die kombinierte Menge von graduellen Pilot-Points ($PP(t)$) und durch die statischen Daten (SD) beschränkt werden;
e)- Ändern der kombinierten Menge ($PP(t)$) und Wiederholen am Schritt c) bis ein Abbruchkriterium erreicht ist;

C) Aktualisieren des geologischen Lagerstättenmodells durch Verbinden der ab dem Schritt B) optimierten Karte mit dem Gitternetz des Modells.

2. Verfahren nach Anspruch 1, wobei die anfänglichen und zusätzlichen Mengen von graduellen Pilot-Points mittels zufälliger Erzeugungen unter Verwendung von Verteilungsgesetzen aufgebaut werden, die von den Werten der statischen Daten (SD) abgeleitet werden.

3. Verfahren nach einem der vorhergehenden Ansprüche, wobei die Parameter, die für einen Pilot-Point charakteristisch sind, unter den folgenden Parametern ausgewählt werden: seiner Position und seinem zugehörigen petrophysikalischen Eigenschaftswert.

4. Verfahren nach einem der vorhergehenden Ansprüche, wobei ein Strömungssimulator verwendet wird, um simulierte dynamische Daten ausgehend von den Werten der petrophysikalischen Eigenschaften der geänderten Ausgangskarte (y) zu schätzen, und ein Vergleich der simulierten dynamischen Daten und der durch Messungen erfassten dynamischen Daten mittels einer Zielfunktion durchgeführt wird, um die kombinierte Menge zu ändern und das Abbruchkriterium zu definieren.

5. Verfahren nach Anspruch 4, wobei, solange die Zielfunktion über einer Schwelle liegt, wenn sie nicht konvergiert, der Verformungsparameter geändert wird und die Optimierung im Schritt c) fortgesetzt wird, und, wenn sie konvergiert, der Ausgangssatz von graduellen Pilot-Points ($PP_i$) durch den kombinierten Satz gradueller Pilot-Points ($PP(t)$) ersetzt wird und es ausgehend vom Schritt b) wiederholt wird.

6. Verfahren nach einem der vorhergehenden Ansprüche, wobei die statischen Daten Bohrlochmessungen und/oder Messungen auf Proben, die in Bohrlöchern entnommen wurden, und/oder seismische Daten sind.

7. Verfahren nach einem der vorhergehenden Ansprüche, wobei die dynamischen Daten Fördermengen- und/oder Bohrlochtest- und/oder Durchschlagzeitdaten sind.

**Claims**

1. A method for updating a geological reservoir model representative of the behaviour of a heterogeneous porous medium and discretized in space into a set of cells forming a grid representative of the structure of said medium, allowing to take account of the dynamic data (DD) acquired by measurements and varying in the course of time according to fluid flows in said medium, the method comprising the following stages:

   A) constructing an initial map ($y$) of petrophysical properties by means of a geostatistical simulator and of static data (SD),

   B) integrating said dynamic data (DD) by optimizing said initial map by carrying out the following stages:

   a)- constructing an initial set of gradual pilot points ($PP_i$),
   b)- constructing at least one complementary set of gradual pilot points ($PP_c$),
   c)- constructing a combined set of gradual pilot points ($PP(t)$) by combining said sets of gradual pilot points ($PP_i$ and $PP_c$) according to the gradual deformation method wherein at least one deformation parameter is a characteristic parameter of said pilot points,
   d)- modifying the values of the petrophysical properties of said initial map ($y$) by constraining it by said combined set of gradual pilot points ($PP(t)$) and by said static data (SD),
   e)- modifying said combined set ($PP(t)$) and repeating from stage c) until a stop criterion is reached,

   C) updating said geological reservoir model by associating said map optimized in stage B) with said grid of the model.

2. A method as claimed in claim 1, wherein the initial and complementary sets of gradual pilot points are constructed by means of random generations using distribution laws deduced from the values of static data (SD).

3. A method as claimed in any one of the previous claims, wherein the characteristic parameters of a pilot point are selected from among the following parameters: its position and its associated petrophysical property value.

4. A method as claimed in any one of the previous claims, wherein a flow simulator is used to estimate the dynamic data simulated from the petrophysical property values of said modified initial map ($y$), and a comparison is performed, by means of an objective function, between said simulated dynamic data and said dynamic data acquired by measurement, so as to modify said combined set and to define said stop criterion.

5. A method as claimed in claim 4 wherein, as long as said objective function is greater than a given threshold, if it does not converge, said deformation parameter is modified and optimization is continued in stage c) and, if it converges, the initial set of gradual pilot points ($PP_i$) is replaced by the combined set of gradual pilot points ($PP(t)$), and the procedure is repeated from stage b).

6. A method as claimed in any one of the previous claims, wherein the static data are logs and/or measurements on samples taken in wells and/or seismic data.

7. A method as claimed in any one of the previous claims, wherein the dynamic data are production data and/or well test data and/or breakthrough time data.

**Figure 1**

**Figure 2**

**Figure 3**

**Figure 4**

Figure 5A

Figure 5B

**Figure 5C**

**Figure 5D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2635197
- US 4972383 A

- FR 2851670

**Littérature non-brevet citée dans la description**

- **TARANTOLA, A.** Inverse problem theory - Methods for data fitting and model parameter estimation. Elsevier, 1987, 613
- **REYNOLDS, A. C. ; HE, N. ; CHU, L. ; OLIVER, D. S.** Reparameterization techniques for generating reservoir descriptions conditioned to variograms and well-test pressure data. *SPE Annual Technical Conference and Exhibition, Dallas,* 22 Octobre 1995, vol. 30588, 609-624
- **MARSILY, G.** De l'identification des systèmes hydrologiques. *Thèse de Doctorat d'Etat,* 1978
- **HU, L.Y.** Gradual deformation and iterative calibration of Gaussian-related stochastic models. *Math. Geology,* 2000, vol. 32 (1), 87-108

- **RAMARAO, B.S. ; LAVENUE, A.M. ; DE MARSILLY, G. ; MARIETTA, M.G.** Pilot point methodology for automated calibration of an ensemble of conditionally simulated transmissivity fields. 1. Theory and computational experiments. *Water Res. Res.,* 1995, vol. 31 (3), 475-493
- **LE RAVALEC, M. ; NOETINGER, B. ; HU, L.-Y.** The FFT moving average (FFT-MA) generator: an efficient numerical method for generating and conditioning Gaussian simulations. *Math. Geol.,* 2000, vol. 32 (6), 701-723
- **CHILÈS, J.P. ; DELFINER, P.** *Geostatistics - Modeling spatial uncertainty, Wiley series in probability and statistics,* 1999
- **ROGGERO, F. ; HU, L.-Y.** Gradual deformation of continuous geostatistical models for history matching. *SPE ATCE,* 1998
- **HU, L.-Y.** Geostats 2000 Cape Town. 2000, vol. 1, 94-103